# EUROPÄISCHE PATENTSCHRIFT

(11) **EP 0 885 798 B1**
(45) Veröffentlichungstag und Bekanntmachung des Hinweises auf die Patenterteilung: **16.08.2001**
(21) Anmeldenummer: 98109056.6
(22) Anmeldetag: 19.05.1998
(51) Int. Cl.: B62D 11/18

(54) **Lenksteuersystem für Raupenfahrzeuge**
Steering control for tracked vehicles
Commande de direction pour véhicules à chenilles

(30) Priorität: 22.05.1997 US 862166
(43) Veröffentlichungstag der Anmeldung: 23.12.1998
(73) Patentinhaber: DEERE & COMPANY, Moline, Illinois 61265-8098 (US)
(72) Erfinder: Straetker, John George, West Chester, OH 45069 (US)
(74) Vertreter: Lau-Loskill, Philipp, Dipl.-Phys.

(56) Entgegenhaltungen:
- US-A- 4 309 917

## Beschreibung

Die Erfindung betrifft ein Lenksteuersystem für ein Raupenfahrzeug mit einem durch eine Bedienungsperson bedienbaren Lenkelement, mit einem Getriebe, welches über eine Kupplung durch einen Verbrennungsmotor angetrieben wird, mit einem Schalthebel, der zwischen einer Parkstellung, einer Neutralstellung und einer Gangeingriffsstellung bewegbar ist, mit einer Steuereinheit zur Erzeugung eines Lenksteuersignals als Funktion einer Lage des Lenkelements, und mit einer linken und einer rechten Raupenlaufbahn, welche durch einen differentiellen Antriebsmechanismus in Abhängigkeit eines Steuersignals angetrieben werden.

Ein gattungsbildendes Lenksystem für Raupenfahrzeuge nach dem Oberbegriff des Auspruchs 1 ist in der älteren europäischen Patentanmeldung No. 98101123.2 beschrieben. Bei diesem Lenksystem ist ein Getriebehebel zwischen einer Parkstellung einer Neutralsstellung und einer Vorwärts- und Rückwärtsstellung bewegbar. Das Lenkrad ist federzentriert und läßt sich in beide Richtungen bis zu Endanschlägen verdrehen. Ein elektronischer Lenkradsensor erzeugt ein absolutes Lenkradlagesignal. Eine auf Mikroprozessorbasis arbeitende Steuereinheit steuert die Fahrzeuglenkung in Abhängigkeit der erfaßten Lenkradlage, der Getriebehebelstellung und anderer Eingaben. Ein derartiges Raupenfahrzeug läßt sich Wenden, d. h. seine Gleisbahnen lassen sich in Gegendrehung betreiben, ohne daß es vorwärts oder rückwärts fährt. In diesem System läßt sich auch die Lenkfunktion elektronisch inaktivieren, wenn sich der Getriebehebel in seiner Parkstellung befindet und das Fahrzeug steht. Es ist nicht erwünscht, daß das Fahrzeug bei ausgerückter Getriebekupplung aufgrund einer Bewegung des Getriebehebels aus seiner Parkstellung in seine Neutralstellung oder aus seiner Parkstellung in eine Gangeingriffsstellung unmittelbar einen Wende- oder Drehvorgang beginnt, sofern das Lenkrad sich zunächst nicht in seiner federzentrierten Mittellage befindet. Es ist desweiteren unerwünscht, von der Bedienungsperson zu fordern, das Lenkrad einfach in seine Mittellage zurückzubewegen, um die Lenkung zu aktivieren. Es ist jedoch wünschenswert die Lenkfunktion bei stehendem Fahrzeug zu erlauben, sofern sich der Getriebehebel in seiner Neutralstellung oder in seiner Gangeingriffsstellung befindet. Es ist daher wünschenswert ein Lenksystem für ein Raupenfahrzeug bereitzustellen, welches unabhängig von der Lenkradlage während einer Bewegung des Getriebehebels aus seiner Parkstellung in seine Neutralstellung oder aus seiner Parkstellung in seine Gangeingriffsstellung inaktiviert wird, wobei die Bedienungsperson die Lenkfunktion beliebig betätigen kann, ohne in dessen Mittellage zurückkehren zu müssen.

Die der Erfindung zugrunde liegende Aufgabe wird darin gesehen, ein gattungsgemäßes Lenksteuersystem für Raupenfahrzeuge anzugeben, welches unabhängig von der Lenkradlage die Lenkung oder eine Gegenrotation der Gleisbahnen während einer Bewegung des Getriebehebels aus seiner Parkstellung in seine Neutralstellung oder aus seiner Parkstellung in seine Gangeingriffsstellung inaktiviert oder abschaltet. Desweiteren soll die Lenkung oder Gegenrotation wie oben beschrieben inaktivierbar sein, wobei es jedoch der Bedienungsperson ermöglicht wird, die Lenk- oder Gegenrotationsfähigkeit wieder zu aktivieren ohne daß das Lenkrad in seine Mittellage gebracht wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß führt die Steuereinheit des Lenksteuersystems einen Algorithmus für einen Übergangs-Gegenrotations-Modus (TCR) aus, wenn bei ausgerückter Kupplung der Getriebehebel aus seiner Parkstellung in seine Neutralstellung oder aus seiner Parkstellung über seine Neutralstellung in seine Gangeingriffsstellung bewegt wird. Wenn dieser TCR-Modus aktiv ist, kann die Lenkung auf zweierlei Weisen vorgenommen werden:
1. durch Drehung des Lenkrades in seine Mittellage und dann Drehung des Lenkrades in eine der beiden Richtungen aus seiner Mittellage heraus oder
2. durch Drehung des Lenkrades in Richtung einer seiner Endanschlagslagen (wobei das Lenkrad nicht zentriert werden muß).

Wenn die Lenkung oder Gegenrotation der beiden Gleisbahnen auf die erste Weise aktiviert wurde, lenkt das Steuersystem auf normale Weise, d. h. die Wendegeschwindigkeit, die eine Funktion der Lage des Lenkhebels ist, ist dieselbe wie während eines normalen Betriebs (Normalmodus).

Wenn die Lenkung oder Gegenrotation auf die zweite Weise aktiviert wurde (Übergangsmodus), dann ist während einer Übergangsperiode die Wendegeschwindigkeit, die eine Funktion der Lage des Lenkrades ist, kleiner als die des normalen Betriebs. Wenn das Lenkrad ganz bis zu einer Endanschlagslage gedreht wurde, vergrößert das Steuersystem automatisch und stufenweise die Geschwindigkeit der Drehung (durch Vergrößerung des Lenkverstärkungswertes) bis die volle normale Wendegeschwindigkeitsfähigkeit erreicht ist.

Sobald das Lenkrad aus seiner Endanschlagslage weggedreht wird, hört der Verstärkungswert auf zu wachsen, und der sich ergebende aktuelle Lenkverstärkungswert wird als neue Lenkverstärkung weiterverwendet. Dieser Lenkverstärkungswert wird bei Rückkehr des Lenkrads in seine Mittellage stufenweise auf das normale Niveau zurückgesetzt. Mit Erreichen der Mittellage wird die Lenkverstärkung auf ihren normalen Wert zurückgestellt, sofern sie diesen noch nicht erreicht haben sollte. Die Zuwachsrate oder -geschwindigkeit des Lenkverstärkungswertes am Endanschlag ist proportional zum Verhältnis aus Antriebsstrangdrehzahl zur Motordrehzahl. Im Falle stationärer Gegenrotation, wird für die Antriebsstrangdrehzahl eine Konstante eingesetzt, die größer als Null ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das vereinfachte, schematische Diagramm des Antriebs eines Raupenfahrzeugs mit einem erfindungsgemäßen Lenksteuersystem und
- Fig. 2: das vereinfachte Schnittdiagramm des Endanschlagmechanismus eines sich zentrierenden Lenkrads, welches in Verbindung mit dem in Fig. 1 gezeigten Lenksteuersystem verwendet werden kann

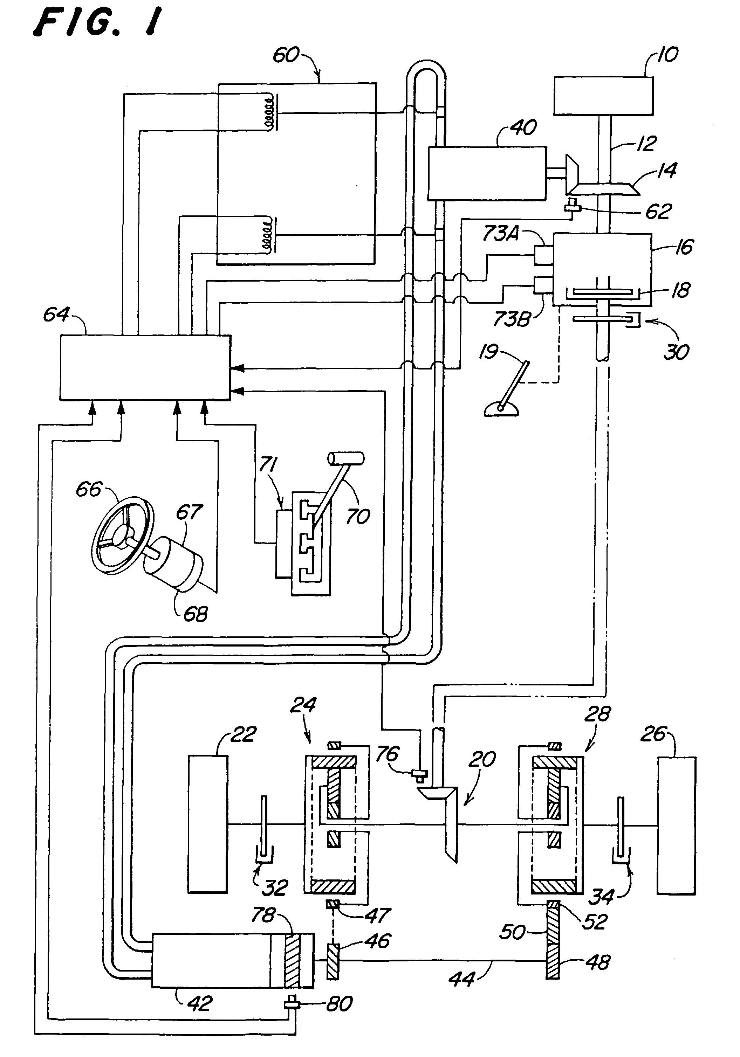

Aus Fig. 1 geht der Antriebsstrang eines Raupenfahrzeugs hervor, welcher einen Antriebsmotor 10 mit einer Ausgangswelle 12 aufweist, die ein rechtwinkliges Kegelrad 14 und ein Getriebe 16, beispielsweise ein Getriebe, wie es bei den John Deere Traktoren der 8000-er Serie verwendet wird, antreibt. Das Getriebe 16 enthält an seiner Ausgangsseite eine durch ein Kupplungspedal 19 gegen die Kraft einer Feder betätigbare Kupplung 18. Der Getriebeausgang treibt über ein rechtwinkliges Kegelradgetriebe 20 sowie einerseits über ein linkes Lenkplanetengetriebe 24 ein linkes Laufbahnantriebsrad 22 sowie andererseits über ein rechtes Lenkplanetengetriebe 28 ein rechtes Laufbahnantriebsrad 26 an. Die Lenkplanetengetriebe 24 und 28 sind vorzugsweise wie die in der US-A-5,390,751 beschrieben ausgebildet. Zusätzlich sind zwischen den Lenkplanetengetrieben und dem zugehörigen Laufbahnantriebsrad 22, 26 nicht dargestellte außenliegende Planetengetriebe, wie sie bei den John Deere Traktoren der 8000-er Serie vorgesehen sind, angeordnet. Diese sind hier jedoch nicht näher beschrieben, weil sie nicht in die Lenksteuerfunktion der vorliegenden Erfindung einbezogen sind. Eine Parkbremse 30 ist mit dem Ausgang der Kupplung 18 verbunden. Linke und rechte Betriebsbremsen 32, 34 sind mit dem linken bzw. dem rechten Laufbahnantriebsrad 22, 26 gekoppelt.

Das rechtwinklige Kegelrad 14 treibt eine hydraulische Lenkverstellpumpe 40, beispielsweise eine 75 cc Pumpe der Serie 90 von der Firma Sauer-Sundstrand, an. Die Lenkverstellpumpe 40 versorgt ihrerseits einen hydraulischen Lenkkonstantmotor 42, beispielsweise einen 75 cc Motor der Serie 90 ebenfalls von der Firma Sauer-Sundstrand. Der Lenkmotor 42 treibt über eine Querwelle 44 und ein Zahnrad 46 ein Ringrad 47 des linken Lenkplanetengetriebes 24 sowie über die Querwelle 44, ein Zahnrad 48 und ein Umkehrzahnrad 50 ein Ringrad 52 des rechten Lenkplanetengetriebes 28 an.

Die nicht gezeigte Schrägscheibe der Lenkpumpe 40 wird durch ein Drucksteuerventil oder eine elektronische Verstellsteuerung (EDC) 60 gesteuert. Die EDC 60 ist vorzugsweise eine bekannte Zweistufenvorrichtung mit einer ersten Stufe, welche ein Klappenrückschlagventil enthält, und mit einer zweiten Stufe, welche eine Druckerhöhungsstufe für die Lenkverstellpumpe 40 enthält, wie beispielsweise eine von der Firma Sauer-Sundstrand käuflich erhältliche Pumpe, deren Steuerschieber geringfügig für kaltes Wetter verändert wurde und die keine manuelle Übersteuerungsfunktion aufweist.

Ein Drehzahlsensor 62, wie beispielsweise ein käuflich erhältlicher magnetischer Aufnehmer, der in der Nähe des rechtwinkligen Kegelrads 14 befestigt ist, liefert ein elektrisches Antriebsmotordrehzahlsignal an eine elektrische Lenksystemsteuereinheit (SSU) 64. Die Magnetspulen des Drucksteuerventils 60 werden durch Pumpensollwertsignale (pump_cmd), die durch die SSU 64 erzeugt werden, gesteuert.

Ein Lenkrad 66 ist mit einem federzentrierten Endanschlagmechanismus 67 und mit einem Drehpositionswandler 68, wie beispielsweise ein Drehpotentiometer verbunden, welches an die SSU 64 ein elektrisches Lenkwinkelsignal (steer_angle) liefert, das die Lage des Lenkrades 66 relativ zu seiner zentrierten Lage repräsentiert.

Ein bekannter Schalthebelzusammenbau mit Hebel und Signalumwandler enthält einen Schalt- oder Ganghebel 70, der in eine neutrale Stellung, eine Parkstellung und eine Vorwärts- und Rückwärtsstellung bewegbar ist, sowie einen Schalthebelsignalumwandler 71, der ein Signal an die SSU 64 liefert, welches der Stellung des Schalthebels 70 entspricht. Ein geeigneter Schalthebelzusammenbau mit Hebel und Signalumwandler wird in der US-A-5,406,860 näher beschrieben.

Ein Kupplungseingriffsschalter 73A ist als ein im Getriebe 16 angeordneter Druckschalter ausgebildet und stellt fest, wann die Kupplung 18 eingerückt ist. Der Kupplungseingriffschalter 73A liefert ein Kupplungeingriffssignal an die SSU 64.

Ein Antriebsstrangdrehzahlsensor 76, vorzugsweise ein differentieller Halleffektdrehzahlsensor, wie er beispielsweise bei von John Deere hergestellten Traktoren verwendet wird, ist in der Nähe des Endantriebs 20 angeordnet und liefert an die SSU 64 ein elektrisches Endantriebsdrehzahl-, ein Fahrzeuggeschwindigkeits- oder ein Raddrehzahlsignal (whl_spd). Ein Magnetring 78 ist drehbar am Lenkmotor 42 montiert, und ein Halleffektwandler 80, der nahe des Magnetrings 78 befestigt ist, liefert an die SSU 64 ein elektrisches Lenkmotordrehzahlsignal und ein elektrisches Lenkmotordrehrichtungssignal.

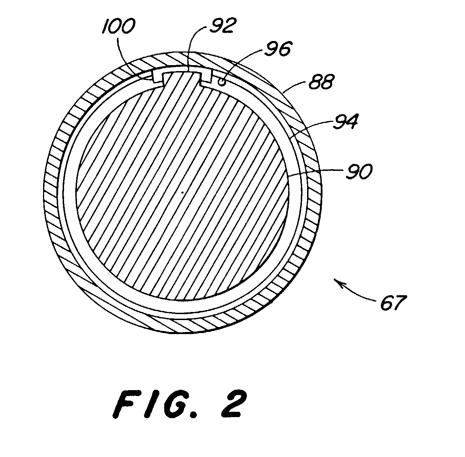

Wie aus Fig. 2 hervorgeht, enthält der Endanschlagmechanismus 67 eine drehbar in einem feststehenden Gehäuse 88 angeordnete und mit dem Lenkrad 66 verbundene Welle 90. Eine Nase oder ein Ansatz 92 überragt die Welle 90. Ein Ring 94 ist drehbar auf der Welle 90 angeordnet. Ein Stift 96 steht in axialer Richtung von dem Ring 94 ab. Eine Endanschlagsnase 100 steht von dem Gehäuse 88 aus radial nach innen vor. Ein nicht dargestellter Torsionsring ist zwischen der Welle 90 und dem Gehäuse 88 befestigt, um die Welle 90 in eine zentrierte Lage zurückzudrehen. Wenn die Welle 90 im Uhrzeigersinn gedreht wird, schlägt der Ansatz 92 an den Stift 96 an, woraufhin sich der Ring 94 mit der Welle 90 dreht bis der Stift 96 mit der Endanschlagsnase 100 in Eingriff tritt, so daß eine weitere Drehung verhindert wird. Der Ansatz 92, der Stift 90 und das Lenkrad 66 sind über einen gesamten Winkelbereich von 580 Grad, von der Mittellage aus 290 Grad im Uhrzeigersinn und 290 Grad gegen den Uhrzeigersinn, drehfähig.

Die SSU 64 enthält vorzugsweise einen nicht dargestellten, käuflich verfügbaren Mikroprozessor, der einen nicht dargestellten Hauptschleifenalgorithmus 200 ausführt, welcher in der älteren europäischen Patentanmeldung No. 98101123.2, auf deren Offenbarung hiermit Bezug genommen wird, beschrieben wurde. Wenn der Ganghebel 70 aus seiner Parkstellung in die Neutralstellung oder von seiner Parkstellung über die Neutralstellung in die Gangeingriffsstellung bei ausgerückter Kupplung 18 bewegt wird, führt die SSU 64 (Annex 1 - 4) einen Algorithmus für einen Übergangs-Gegenrotations-Modus (TCR) aus.
- Annex 1 - 4: gibt die Pseudocode-Beschreibung eines Algorithmus für einen Übergangs-Gegenrotations-Modes (TCR-Mode) wieder, welcher durch einen Mikroprozessor des Steuersystems gemäß Fig. 1 ausgeführt wird, wenn der Ganghebel von der Parkstellung in die Neutralstellung oder von der Parkstellung über die Neutralstellung in die Gangeingriffsstellung bewegt wird, während die Kupplung ausgerückt ist.

Die nachfolgende Beschreibung bezieht sich auf die Zeilennummern des im Annex 1 - 4 aufgelisteten Pseudocode.

Der in dem Annex 1 - 4 dargestellte Algorithmus ermöglicht das Wenden oder Drehen des Fahrzeugs, wenn der Ganghebel 70 aus seiner Parkstellung bewegt wird, während die Kupplung 18 ausgerückt ist und sich das Lenkelement 66 in einer ersten nichtzentrierten, ausgelenkten Lage befindet. Nachdem das Wenden unterdrückt (nicht aktiviert) ist, ermöglicht (aktiviert) der Algorithmus das Wenden des Fahrzeugs dann, wenn das Lenkelement 66 zunächst in seiner mittleren Lage ist und dann aus seiner mittleren Lage weggedreht wird. Nach dem Unterdrücken des Wendens ermöglicht der Algorithmus auch das Wenden des Fahrzeugs als Reaktion auf eine Drehung des Lenkelements 66 in Richtung einer seiner Endanschlagslagen bis zu einer zweiten, nichtzentrierten ausgelenkten Lage.

Der Algorithmus enthält einen Normalmodus (Zeile 31) welcher während eines normalen Fahrzeugbetriebs wirksam ist, um das Lenksteuersignal zu erzeugen, wobei die Wende- oder Drehgeschwindigkeit des Fahrzeugs eine erste Funktion der Lage des Lenkelements 66 ist. Der Algorithmus enthält auch einen Übergangsmodus (Zeilen 18 - 30, 32 - 83, 60 - 80, 86 - 111), der wirksam ist, während das Lenkelement 66 sich an der zweiten, ausgelenkten Lage befindet, um ein Lenksteuersignal zu erzeugen, und bei der die Wendegeschwindigkeit des Fahrzeugs kleiner ist als die Wendegeschwindigkeit für dieselbe Lenkwinkellage während des normalen Betriebs. Gemäß den Zeilen 46, 47 und 66 - 72 wirkt der Übergangsmodus so, daß eine anfängliche Übergangswendegeschwindigkeit, die aufgrund einer anfänglichen Aktivierung der Fahrzeugwendung oder -drehung wirksam wird, kleiner ist als eine normale Wendegeschwindigkeit, welche wirksam ist, wenn sich das Lenkelement 66 während eines normalen Betriebs in derselben Lage befindet.

Wenn während des Betriebs des Übergangsmodus das Lenkelement 66 in seiner Endanschlagslage gehalten wird, veranlassen die Schritte gemäß Zeilen 88 - 111 eine stufenweise Erhöhung der Fahrzeugwendegeschwindigkeit. Infolge der Zeilen 84, 89 und 114 erhöht sich die Wendegeschwindigkeit des Übergangsmodus mit einer Geschwindigkeit, welche proportional zu dem Verhältnis aus der Antriebsgeschwindigkeit zu der Motordrehzahl ist. Gemäß der Zeilen 74 - 76 und 114 steigt im Falle, daß das Lenkelement 66 von seiner Endanschlagslage weggedreht wird, die Fahrzeugwendegeschwindigkeit nicht mehr an, und der sich ergebende Lenkverstärkungswert wird als neue Lenkverstärkung verwendet. Die Zeilen 74 - 76 wirken so, daß die Wendegeschwindigkeit stufenweise auf den Geschwindigkeitswert zurückgeführt wird, der während eines normalen Betriebs wirksam ist, wenn das Lenkelement 66 zu seiner mittleren Lage zurückkehrt. Bei stehendem Fahrzeug erhöht sich gemäß Zeile 43 die Fahrzeugwendegeschwindigkeit mit einer Steigerungsrate, welche proportional zu dem Verhältnis aus einer Konstanten zu der Motordrehzahl ist.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

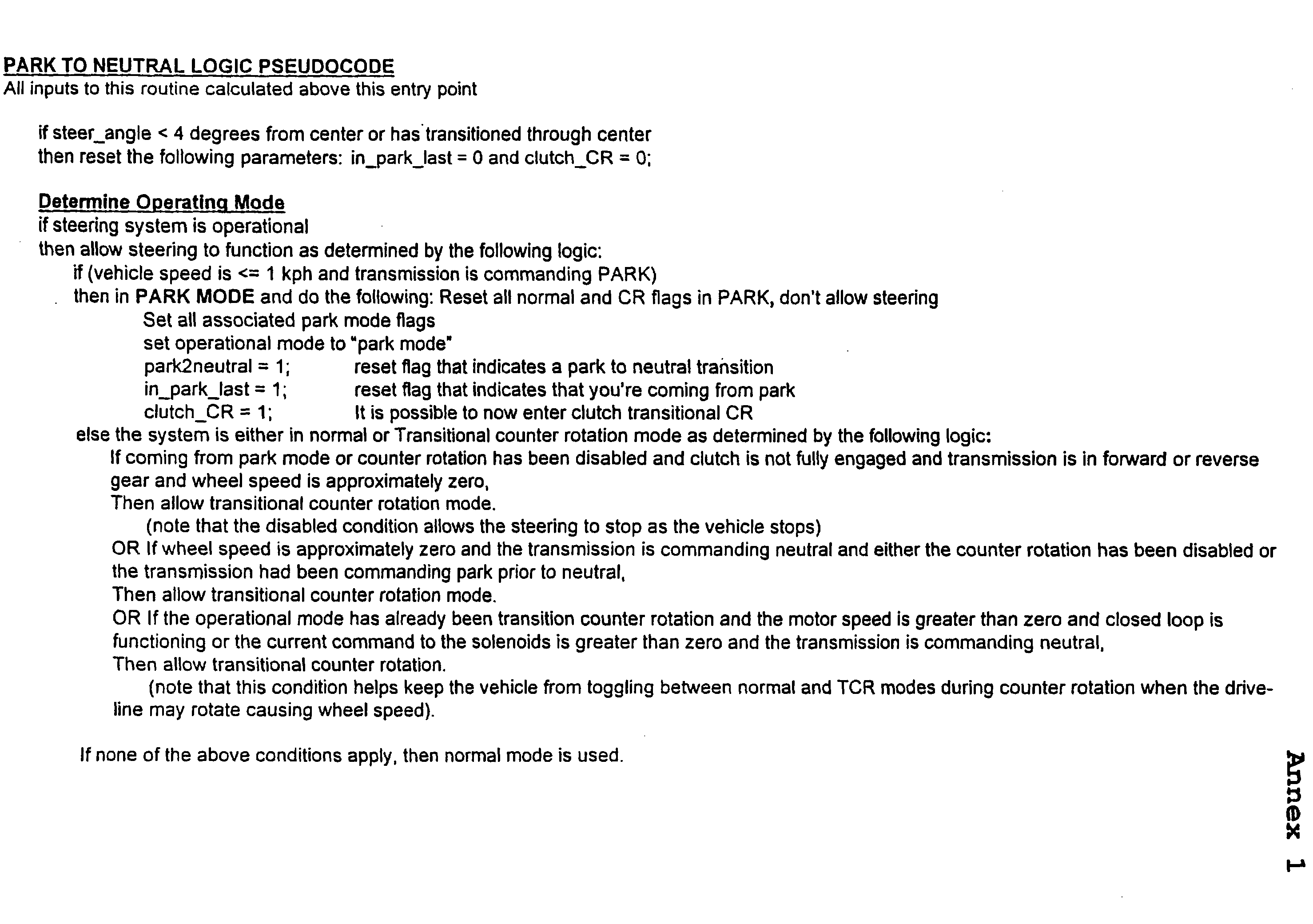

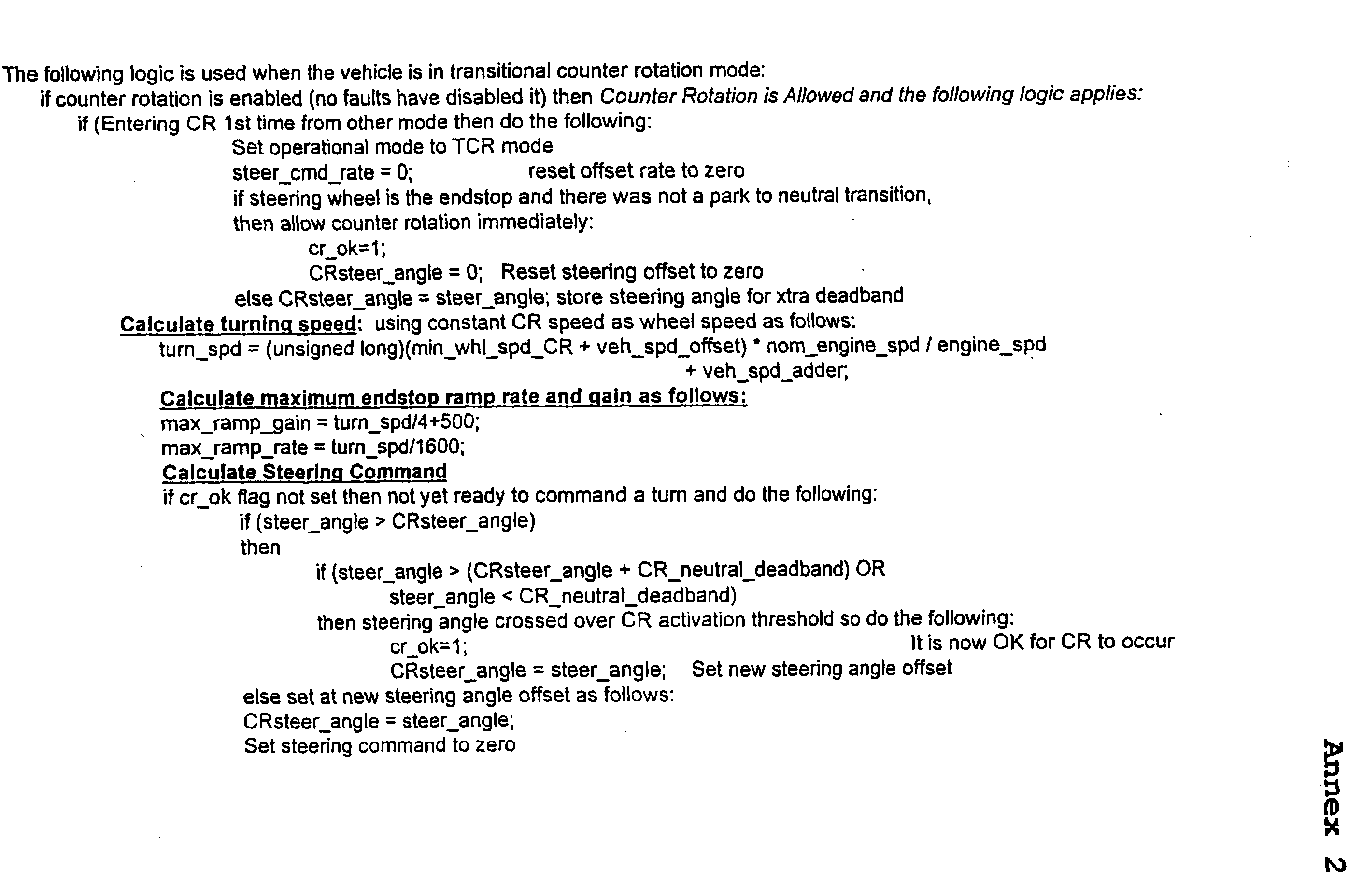

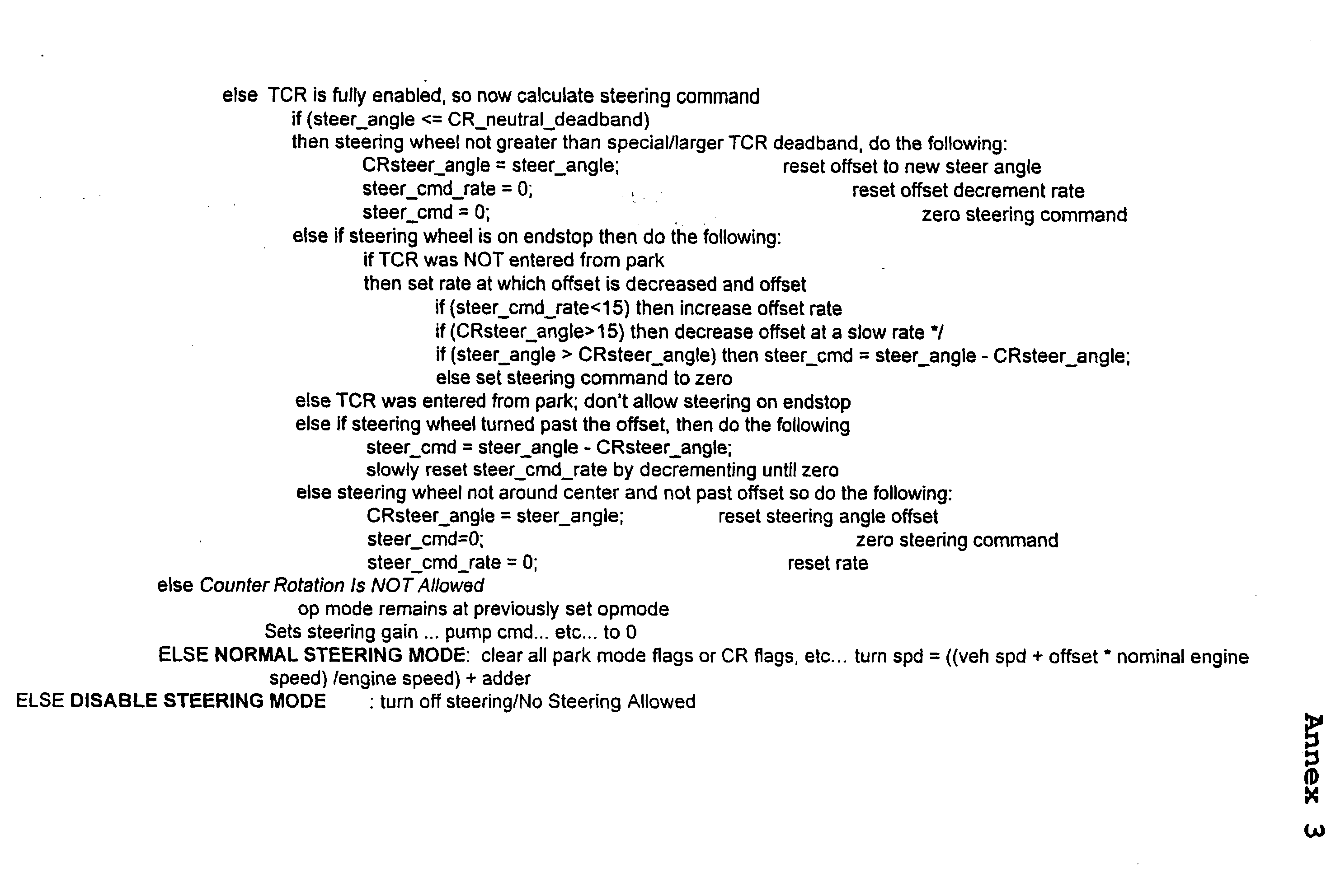

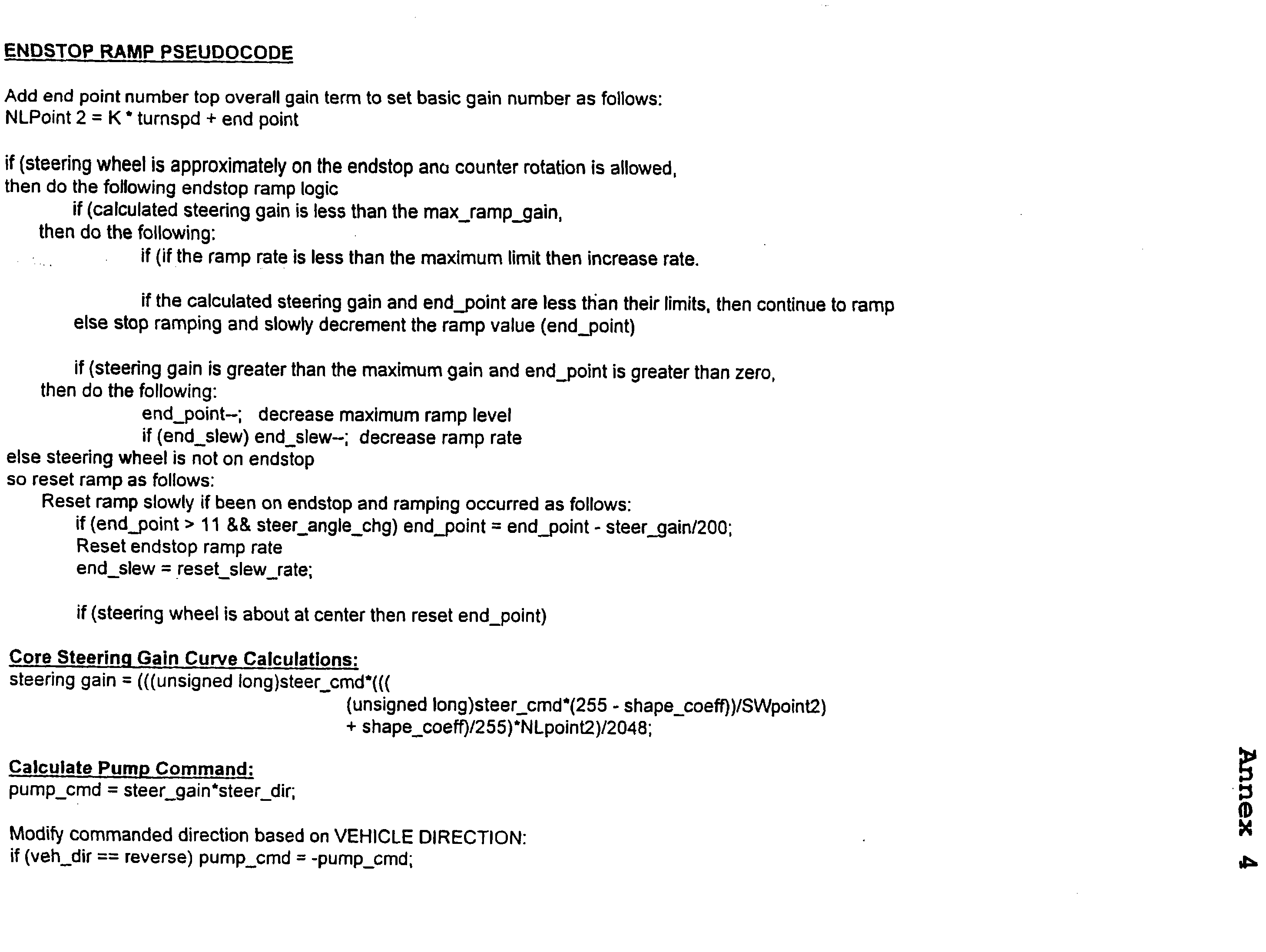

## Patentansprüche

1. Lenksteuersystem für ein Raupenfahrzeug mit einem durch eine Bedienungsperson bedienbaren Lenkelement (66), mit einem Getriebe (16), welches über eine Kupplung (18) durch einen Motor (10) angetrieben wird, mit einem Schalthebel (70), der zwischen einer Parkstellung, einer Neutralstellung und einer Gangeingriffsstellung bewegbar ist, mit einer Steuereinheit (64) zur Erzeugung eines Lenksteuersignals als Funktion einer Lage des Lenkelements (66), und mit einer linken und einer rechten Raupenlaufbahn, welche durch einen differentiellen Antriebsmechanismus (24, 28) in Abhängigkeit eines Steuersignals angetrieben werden,
mit einen Schalthebelsensor (71) zur Erzeugung eines Schalthebelsignals, welches die Stellung des Schalthebels (70) repräsentiert,
mit einen mit dem Lenkelement (66) in Verbindung stehenden Drehpositionssensor (68), der ein Lenksignal erzeugt, welches die Lage des Lenkelements (66) repräsentiert,
gekennzeichnet durch
- einen Kupplungseingriffssensor (73A) zur Erzeugung eines Auskuppelsignals, wenn die Kupplung ausgerückt ist, und
- eine Steuereinheit, welche Mittel zur Erzeugung eines Lenksteuersignals in Abhängigkeit des Auskuppelsignals, des Schalthebelsignals und des Lenksignals sowie Mittel enthält, zum Inaktivieren des Wendens des Fahrzeugs, wenn bei ausgerückter Kupplung (18) der Schalthebel (70) aus seiner Parkstellung bewegt wurde und sich das Lenkelement (66) in einer ersten nichtzentrierten, ausgelenkten Lage befindet.

2. Lenksteuersystem nach Anspruch 1, dadurch gekennzeichnet, daß die Steuereinheit (64) Mittel enthält, die nach dem Inaktivieren des Wendens wirksam sind, um das Wenden des Fahrzeugs zu ermöglichen, wenn das Lenkelement (66) zunächst in seine Mittellage und dann aus der Mittellage wegbewegt wird.

3. Lenksteuersystem nach Anspruch 1 oder 2, dadurch gekennzeichnet, daß die Steuereinheit Mittel enthält, die nach dem Inaktivieren des Wendens wirksam sind, um in Abhängigkeit einer Drehung des Lenkelements (66) das Wenden des Fahrzeugs zu ermöglichen, sofern das Lenkelement (66) in Richtung einer seiner Endanschlagslagen zu einer zweiten nichtzentrierten, ausgelenkten Lage verdreht wird.

4. Lenksteuersystem nach Anspruch 3, bei dem die Steuereinheit gekennzeichnet ist durch Mittel zur Durchführung eines Normalmodus, die bei einem normalen Betrieb des Fahrzeugs wirksam sind und ein Lenksteuersignal derart erzeugen, daß die Fahrzeugwendegeschwindigkeit gemäß einer ersten Funktion von der Lage des Lenkelements (66) abhängt, und durch Mittel zur Durchführung eines Übergangsmodus, die wirksam sind, während das Lenkelement (66) sich in der zweiten ausgelenkten Lage befindet, und die ein Lenksignal derart erzeugen, daß die Fahrzeugwendegeschwindigkeit gemäß einer zweiten Funktion, die sich von der ersten Funktion unterscheidet, von der Lage des Lenkelements (66) abhängt.

5. Lenksteuersystem nach Anspruch 4, dadurch gekennzeichnet, daß die Übergangsmodus-Mittel Mittel enthalten, denen zufolge eine anfängliche Übergangswendegeschwindigkeit, die zu Beginn einer Aktivierung des Fahrzeugwendens wirksam ist, kleiner ist als eine normale Wendegeschwindigkeit, die wirksam ist, wenn sich das Lenkelement (66) während des Normalmodus-Betriebs in seiner zweiten, ausgelenkten Lage befindet.

6. Lenksteuersystem nach Anspruch 4 oder 5, dadurch gekennzeichnet, daß die Übergangsmodus-Mittel Mittel enthalten, denen zufolge eine anfängliche Übergangswendegeschwindigkeit, die zu Beginn einer Aktivierung des Fahrzeugwendens wirksam ist, kleiner ist als eine normale Wendegeschwindigkeit, die wirksam ist, wenn sich das Lenkelement (66) während des Normalmodus-Betriebs in einer Endanschlagslage befindet, und daß Mittel vorgesehen sind, die die Fahrzeugwendegeschwindigkeit stufenweise erhöhen, solange sich das Lenkelement (66) während des Übergangsmodus-Betriebs in seiner Endanschlagslage befindet.

7. Lenksteuersystem nach einem der Ansprüche 4 bis 6, gekennzeichnet durch einen Antriebsdrehzahlsensor (76) zur Erfassung der Antriebsstrangdrehzahl an einem Eingang des differentiellen Antriebsmechanismus (24, 28), desweiteren durch einen Motordrehzahlsensor (62) zur Erfassung der Motordrehzahl und durch eine Ausbildung der Übergangsmodus-Mittel, durch die die Fahrzeugwendegeschwindigkeit mit einer Zuwachsrate erhöht wird, die proportional zu dem Verhältnis aus der Antriebsstrangdrehzahl zu der Motordrehzahl ist.

8. Lenksteuersystem nach einem der Ansprüche 4 bis 7, dadurch gekennzeichnet, daß die Übergangsmodus-Mittel Mittel enthalten, denen zufolge dann, wenn das Lenkelement (66) aus seiner Endanschlagslage weggedreht wird, die Fahrzeugwendegeschwindigkeit nicht mehr weiter zunimmt und der resultierende Lenkverstärkungswert als neue Lenkverstärkung verwendet wird.

9. Lenksteuersystem nach einem der Ansprüche 4 bis 8, dadurch gekennzeichnet, daß die Übergangsmodus-Mittel Mittel enthalten, die die Fahrzeugwendegeschwindigkeit auf die während des Normalmodusbetriebs vorliegende Wendegeschwindigkeit stufenweise zurückführen, sofern das Lenkelement (66) in seine Mittellage zurückkehrt.

10. Lenksteuersystem nach einem der Ansprüche 4 bis 9, gekennzeichnet durch einen Motordrehzahlsensor zur Erfassung der Motordrehzahl und durch eine Ausbildung der Übergangsmodus-Mittel, durch die bei stehendem Fahrzeug die Fahrzeugwendegeschwindigkeit mit einer Zuwachsrate erhöht wird, die proportional zu dem Verhältnis aus einer Konstanten zu der Motordrehzahl ist.

## Claims

1. A steering control system for a tracked vehicle with a steering member (66) operable by an operator, a transmission (16) which is driven through a clutch (18) by an engine (10), a gear lever (70) which can be moved between a parking position, a neutral position and an in-gear position, a control unit (64) for generating a steering control signal as a function of a position of the steering member (66), and left and right tracks which are driven through a differential drive mechanism (24, 28) in dependence on a control signal, a gear lever sensor (71) for generating a gear lever signal which represents the position of the gear lever (70), a rotary position sensor (68) which is coupled to the steering member (66) and generates a steering signal which represents the position of the steering member (66), characterized by a clutch engagement sensor (73A) for generating a disengaged signal when the clutch is disengaged, and a control unit which includes means for generating a steering control signal in dependence on the disengaged signal, the gear lever signal and the steering signal and means for disabling the turning of the vehicle when the gear lever (70) is moved out of its parking position with the clutch (18) disengaged and the steering member (66) is in a first non-centred, displaced position.

2. A steering control system according to claim 1, characterized in that the control unit (64) includes means operative after disabling turning to enable turning of the vehicle when the steering member (66) is moved firstly into its middle position and then out of the middle position.

3. A steering control system according to claim 1 or 2, characterized in that the control unit includes means operative after disabling turning to enable turning of the vehicle in dependence on a turning of the steering member (66) insofar as the steering member (66) is turned in the direction of one of its end stop position to a second non-centred, displaced position.

4. A steering control system according to claim 3, in which the steering unit is characterized by means for implementing a normal mode which are operative in normal operation of the vehicle and generate a steering control signal such that the vehicle turning speed depends on the position of the steering member (66) in accordance with a first function thereof, and by means for implementing a transition mode which are operative while the steering member (66) is in the second displaced position and which generate a steering control signal such that the vehicle turning speed depends on the position of the steering member (66) in accordance with a second function thereof, which is different from the first function.

5. A steering control system according to claim 4, characterized in that the transition mode means include means which result in an initial transition turning speed which is effective at the beginning of activation of turning the vehicle and is smaller than a normal turning speed which is effective when the steering member (66) is in its second, displaced position during the normal operating mode.

6. A steering control system according to claim 4 or 5, characterized in that the transition mode means include means which result in an initial transition turning speed which is effective at the beginning of activation of turning the vehicle and is smaller than a normal turning speed which is effective when the steering member (66) is in an end stop position during the normal mode of operation, and in that means are provided which increase the vehicle turning speed by steps, so long as the steering member (66) is in its end stop position during the transition mode operation.

7. A steering control system according to any of claims 4 to 6, characterized by a drive speed of rotation sensor (76) for detecting the drive train speed of rotation at an input of the differential drive mechanism (24, 28), further by an engine speed sensor (62) for detecting the engine speed of rotation and by an arrangement of the transition mode means through which the vehicle turning speed is increased with a rate of growth which is proportional to the ratio of the speed of rotation of the drive train to the engine speed of rotation.

8. A steering control system according to any of claims 4 to 7, characterized in that the transition mode means include means which result in the vehicle turning speed increasing no further when the steering member (66) is turned out of its end stop position and the resulting steering gain value is used as a new steering gain.

9. A steering control system according to any of claims 4 to 8, characterized in that the transition mode means include means which restore the vehicle turning speed by steps to the turning speed present during the normal mode operation insofar as the steering member (66) is returned to its middle position.

10. A steering control system according to any of claims 4 to 9, characterized by an engine speed of rotation sensor for detecting the engine speed and by an arrangement of the transition mode means through which the vehicle turning speed is increased with the vehicle stationary with a rate of growth which is proportional to the ratio of a constant to the engine speed of rotation.

## Revendications

1. Système de commande de direction pour un véhicule à chenilles comportant un élément de direction (66), qui peut être actionné par un opérateur, comportant une boîte de vitesses (16), qui est entraînée par un moteur (10) par l'intermédiaire d'un embrayage (18), un levier de changement de vitesse (70), qui peut être déplacé entre une position de parcage, une position neutre et une position d'engagement d'une vitesse, une unité de commande (64) servant à produire un signal de commande de direction en fonction de la position de l'élément de direction (66), et une piste de circulation de chenille de gauche et une piste de circulation de chenille de droite qui sont entraînées par un mécanisme d'entraînement différentiel (24,28) en fonction d'un signal de commande, comportant un capteur (71) du levier de changement de vitesse servant à produire un signal du levier de changement de vitesse, qui représente la position du levier de changement de vitesse (70), et un capteur (66) de la position de rotation, qui est relié à l'élément de direction (66) et produit un signal de direction qui représente la position de l'élément de direction (66), caractérisé par
- un capteur (73A) d'activation de l'embrayage servant à produire un signal de désaccouplement lorsque l'embrayage est désaccouplé,
- une unité de commande, qui contient des moyens pour produire un signal de commande de direction en fonction du signal de désaccouplement, du levier de changement de vitesse et du signal de direction, et des moyens servant à rendre inopérant le braquage du véhicule lorsque, alors que l'embrayage (18) est désenclenché, le levier de changement de vitesse (70) a été déplacé à partir de sa position de parcage et que l'élément de direction (66) est situé dans une première position déviée, non centrée.

2. Système de commande de braquage selon la revendication 1, caractérisé en ce que l'unité de commande (64) comprend des moyens qui agissent après la désactivation du braquage, pour permettre le braquage du véhicule lorsque l'élément de direction (66) est tout d'abord amené dans sa position médiane, puis est écarté de la position médiane.

3. Système de commande de direction selon la revendication 1 ou 2, caractérisé en ce que l'unité de commande contient des moyens qui sont efficaces après la désactivation du braquage, pour permettre le braquage du véhicule, en fonction d'une rotation de l'élément de direction (66), dans la mesure où on fait tourner l'élément de direction (66) en direction de l'une de ses positions de butée finales vers une seconde position déviée, non centrée.

4. Système de commande de direction selon la revendication 3, dans lequel l'unité de commande est caractérisée par des moyens pour la mise en oeuvre d'un mode normal, qui sont actifs dans le cas d'un fonctionnement normal du véhicule et produisent un signal de commande de direction de telle sorte que la vitesse de braquage du véhicule dépend, conformément à une première fonction, de la position de l'élément de direction (66), et par des moyens pour la mise en oeuvre d'un mode de transition, qui sont actifs alors que l'élément de direction (66) est situé dans la seconde position déviée et qui produisent un signal de braquage de telle sorte que la vitesse de braquage du véhicule dépend, conformément à une seconde fonction qui diffère de la première fonction, de la position de l'élément de direction (66).

5. Système de commande de direction selon la revendication 4, caractérisé en ce que les moyens de mise en oeuvre d'un mode de transition contiennent des moyens, grâce auxquels une vitesse initiale de braquage transitoire, qui est active au début d'une activation du braquage du véhicule, est inférieure à une vitesse normale de braquage, qui est active lorsque l'élément de direction (66) est situé dans sa seconde position déviée, pendant le fonctionnement dans le mode normal.

6. Système de commande de direction selon la revendication 4 ou 5, caractérisé en ce que les moyens d'exécution d'un mode de transition contiennent des moyens, sur la base desquels une vitesse initiale de braquage transitoire, qui est active au début d'une activation du braquage du véhicule, est inférieure à une vitesse normale de braquage, qui est active lorsque l'élément de direction (66) est situé dans une position de butée extrême pendant le fonctionnement dans le mode normal, et que des moyens sont prévus pour augmenter d'une manière échelonnée la vitesse de braquage du véhicule tant que l'élément de direction (66) est situé dans sa position de butée extrême, pendant le fonctionnement dans le mode de transition.

7. Système de commande de direction selon l'une des revendications 4 à 6, caractérisé par un capteur (76) de la vitesse de rotation d'entraînement pour détecter la vitesse de rotation de la chaîne motrice à une entrée du mécanisme d'entraînement différentiel (24,28), et d'autre part par un capteur (62) de la vitesse de rotation du moteur servant à détecter la vitesse de rotation du moteur, et par un agencement des moyens mettant en oeuvre le mode de transition, à l'aide desquels la vitesse de braquage du véhicule est accrue avec un taux de croissance qui est proportionnel au rapport de la vitesse de rotation de la chaîne motrice à la vitesse de rotation du moteur.

8. Système de commande de direction selon l'une des revendications 4 à 7, caractérisé en ce que les moyens d'exécution du mode de transition contiennent des moyens, sur la base desquels, lorsqu'on fait tourner l'élément de direction (66) à partir de sa position de butée extrême, la vitesse de braquage du véhicule n'augmente plus et la valeur résultante d'amplification de braquage est utilisée en tant que nouvelle amplification de braquage.

9. Système de commande de direction selon l'une des revendications 4 à 8, caractérisé en ce que les moyens d'exécution du mode de transition contiennent des moyens qui réduisent d'une manière échelonnée la vitesse de braquage du véhicule à la vitesse de braquage présente dans le fonctionnement dans le mode normal, dans la mesure où l'élément de braquage (66) revient dans sa position médiane.

10. Système de commande de direction selon l'une des revendications 4 à 9, caractérisé par un capteur de la vitesse de rotation du moteur servant à détecter la vitesse de rotation du moteur, et par un agencement des moyens d'exécution du mode de transition, à l'aide desquels, lorsque le véhicule est à l'arrêt, la vitesse de braquage du véhicule est accrue avec un taux d'accroissement qui est proportionnel au rapport d'une constante à la vitesse de rotation du moteur.
